# EUROPÄISCHE PATENTANMELDUNG

(11) **EP 2 449 884 A2**
(43) Veröffentlichungstag der Anmeldung: **09.05.2012**
(21) Anmeldenummer: 11186319.7
(22) Anmeldetag: 24.10.2011
(51) Int. Cl.: A21B 3/04, F24C 15/32

(54) **Dampfgargerät**

(30) Priorität: 05.11.2010 DE 102010043490
(71) Anmelder: BSH Bosch und Siemens Hausgeräte GmbH, 81739 München (DE)
(72) Erfinder: Schlegel, Markus, 75015 Bretten (DE)

(57) **Zusammenfassung**

Die Erfindung betrifft ein Dampfgargerät, insbesondere für den Haushalt, mit einem Garraum (16), dem Dampf von einem Dampferzeuger (42) über eine Dampfleitung (40) zuführbar ist.

Insbesondere zur Verringerung der Abgabe von Kondensattropfen in den Garraum wird vorgeschlagen in der Dampfleitung (40) eine Fangeinrichtung (91) für Kondensat anzuordnen, die vorzugsweise das Kondensat über einen Dampf-Zuleitungsabschnitt (44) der Dampfleitung (40) nach unten in Richtung Dampferzeuger (42) abfließen oder abtropfen lässt. Gemäß einer weiteren oder ergänzenden Lösung ist der Durchflussquerschnitt des Dampf-Zuleitungsabschnitts (90) so auf die abgegebenen Dampfmengen abgestimmt ist, dass die Dampfströmungsgeschwindigkeit langsam genug ist, um Kondensattropfen oder -Rinnsale darin gegen die Dampfströmung abtropfen oder abfließen zu lassen.

## Beschreibung

Die Erfindung betrifft gemäß den Oberbegriffen der Patentansprüche 1 oder 3 ein Dampfgargerät, insbesondere für den Haushalt.

Bei Dampfgargeräten besteht allgemein, das Problem, dass mit dem Dampf bei vielen Betriebsarten mehr als nötig Wasser in den Garraum eingetragen werden kann. Bei den meist im Wesentlichen drucklos, d.h. etwa bei Atmosphärendruck arbeitenden Systemen wird ein Sattdampf erzeugt. Der Dampfstrom trägt ab seiner Entstehung vorhandene und danach darin auskondensierte Tröpfchen mit sich und kann einen an der Innenwandfläche der Dampfleitung niedergeschlagenen Kondensatfilm bis in den Garraum treiben oder Tröpfchen aus diesem Kondensatfilm herausreißen und mitnehmen. Zuviel in den Garraum eingetragenes Kondensat oder sogar auf das behandelte Gut gespritzte Wassertropfen können die Gar- und Backergebnisse beeinträchtigen und zu Pfützenbildungen führen.

Neben reinen Dampfgargeräten, deren Garraum nur mit einem darin erzeugten oder eingeleitetem Wasserdampf beheizt wird sind auch Kombinationsbacköfen bekannt, bei denen der Garraum zusätzlich eine Heizung aufweist mit der er auf übliche Backofentemperaturen bis etwa 280 °C aufheizbar ist, wobei diese Heizungsarten einzeln oder kombiniert verwendet werden können. Dabei wird meist drucklos oder mit geringem Überdruck im Garraum gearbeitet.

Aus der Deutschen Offenlegungsschrift DE198 58 134A1 ist ein Kombinationsgargerät bzw. Kombinationsbackofen bekannt bei dem die Dampfleitung von einem unter dem Garraum angeordneten Dampferzeuger entlang der Rückwand des Garraumes bis in dessen mittlere Höhe in der den Garraum umgebenden Isolierung geführt ist, was ihrer Abkühlung und damit auch der Dampfkondensation in der Dampfleitung entgegenwirkt. Allerdings ist der Fertigungsaufwand durch die Verlegung unter der Isolierung erhöht und ein Austausch durch den Kundendienst schwierig.

Der Erfindung liegt die Aufgabe zugrunde ein Dampfgargerät gemäß dem Oberbegriff des Anspruches 1 oder 3 zu schaffen, das die Nachteile des bekannten Standes der Technik vermeidet oder mindert und insbesondere die Abgabe von Wasserkondensattropfen in den Garraum vermeidet oder mindert.

Diese Aufgabe wird gelöst durch die Merkmalskombinationen der Ansprüche 1 oder 3. Diese Lösungen haben den Vorteil bei einem Dampfgargerät mit geringem Fertigungsaufwand, auf konstruktiv einfache Weise den Eintrag von Kondensat und insbesondere größerer Kondensattropfen in den Garraum wesentlich zu reduzieren. Dabei kann die Dampfleitung einen den Dampferzeuger und die Fangeinrichtung verbindenden Dampf-Zuleitungsabschnitt aufweist, der in Dampfströmungsrichtung nach oben verläuft und in dem gesammeltes Kondensat unter Schwerkraftwirkung von der Fangeinrichtung in Richtung Dampferzeuger abfließt oder abtropft, so dass keine zusätzliche Leitung für die Abführung des Kondensats erforderlich und der Bauaufwand gering ist. Hierzu kann die Dampfabgabe schubweise erfolgen und das gesammelte, zunächst von der Strömung in der Fangeinrichtung am Ort gehaltene Kondensat in den Pausen abfließen.

Alternativ oder ergänzend kann die Dampfleitung einen an den Dampferzeuger anschließenden, in Dampfströmungsrichtung nach oben führenden Dampf-Zuleitungsabschnitt aufweisen, dessen Durchflussquerschnitt so auf die abgegebenen Dampfmengen abgestimmt ist, dass die Dampfströmungsgeschwindigkeit langsam genug ist, um Tropfen oder -Rinnsale gesammelten Kondensats darin unter Schwerkraftwirkung gegen die Dampfströmung abtropfen oder abfließen zu lassen. Ein Zuleitungsabschnitt mit einem so weiten Querschnitt kann auch schon allein, ohne spezielle Kondensatfalle oder diese ergänzend eine Kondensatsammeleinrichtung sein und Kondensat sammeln und zurück zum Dampferzeuger bzw. dessen Wasservorrat abführen. Größere Kondensattropfen oder Rinnsale können frei fallen oder entlang der Innenwand fließen.

Für die Ableitung des Kondensats kann es von Vorteil sein, wenn der Zuleitungsabschnitt mindestens im Bereich der Fangeinrichtung schräg nach oben verläuft, wobei er einen Winkel von etwa 20 bis 60 und insbesondere etwa 40 Winkelgraden mit der Vertikalrichtung einschließen kann. Hierdurch kann sich Kondensat leichter auf eine Seite Sammeln und gesammelt auch leichter gegen die Dampfströmung durchsetzen und abfließen.

Gemäß einer bevorzugten Bauform weist die Dampfleitung zur Bildung der Fangeinrichtung eine Strömungsumlenkstelle z.B in Form einer sprunghaften Verengung des Durchflussquerschnitts auf, wobei eine Strömungsumlenkung mindestens eines Teils des Dampfstroms, vor allem aber auch eine Flussumlenkung eines eventuell an der Wand hochgeblasenen Kondensatfilms erfolgt. Die Tröpfchen im umgelenkten Dampfstrom folgen aufgrund ihres Masseimpulses nicht der Umlenkung und prallen auf die Wand wo sie sich sammeln. Der Kondensatfilm an der Wand gerät an der Strömungsumlenkstelle in stömungstote Winkel und/oder umlaufende Nuten und macht den Weg um Kanten nicht beliebig mit und sammelt sich. Das Gesammelte Kondensat hat dann bei geeigneter Gestaltung, z.B. Neigung der Dampfleitung zur Sammlung an einer Seite, das Gewicht und die Wucht sich auch gegen die Dampfströmung durchzusetzen oder fließt in Dampfpausen ab. An der Verengungsstelle, vorzugsweise mit einer umlaufenden Stufe, kann die innere Weite, z. B. der Innendurchmesser der Dampfleitung auf unter etwa 55 %, vorzugsweise unter etwa 45 % verengt sein oder das Verhältnis der Innendurchmesser zueinander zwischen etwa 4 zu 1 und 2 zu 1 liegen.

Eine einfache fertigungsgünstige Bauform erhält man, wenn die Strömungsumlenkstelle einen engeren, vorzugsweise oberen Leitungsabschnitt aufweist, der ein Stück weit in einen, im Querschnitt weiteren Leitungsabschnitt ragt. Das Ende des engeren Leitungsabschnittes kann dabei eine frei auskragende Abtropfkante bilden, die nicht umlaufend durchgehend sein muss. Zwischen den Leitungsabschnitten kann auch eine Kondensat-Sammelrinne ausgebildet sein. Alternativ oder zusätzlich kann ein die Leitungsabschnitte verbindendes Zwischenelement, z.B. eine Reduzierhülse einen frei, mit Abstand vom umgebenden weiteren Leitungsabschnitt ein Stück in den weiteren Leitungsabschnitt vorspringenden Ansatz aufweisen.

Vorteilhafterweise besitzt die Dampfleitung einen, an den Garraum anschließenden Einleitungsabschnitt, und ist die Fangeinrichtung im Übergangsbereich vom Zuleitungsabschnitt zum Einleitungsabschnitt angeordnet, wo sie ganz oder fast ohne zusätzlichen Aufwand erzielt werden kann. Dabei kann zweckmäßigerweise der Einleitungsabschnitt den engeren und der Zuleitungsabschnitt den im Querschnitt weiteren Leitungsabschnitt der Strömungsumlenkstelle bilden und dazwischen das Zwischenelement, z.B. eine Reduzierhülse aus einem gummielastischen Material wie Silikonkautschuk eingesetzt sein. Das gummielastische Material des Zwischenelements hält auch dem Aufprall der doch relativ schnell fliegenden Wassertröpfchen gut stand. Die verschiedenen Leitungsabschnitte bzw. Leitungsbauelemente wie das Zwischenelement ermöglichen dabei eine Preiswerte Dampfleitung zu schaffen, die aufgeteilt ist um durch Materialanpassung an ihre unterschiedlichen Temperaturbereiche die Kosten zu senken und/oder besonders hohe Temperaturen im Garraum zu ermöglichen. Die Temperaturbeständigkeit verschiedener gummielastischen Werkstoffe wie Silikonkautschuk ist auch eine Kostenfrage und Metallrohr des Einleitungsabschnitts, z.B. aus Edelstahl, ist pro Längeneinheit teurer. die Gestaltung, Aufteilung und Materialauswahl der gesamten Dampfleitung kann entsprechend kostenmäßig optimiert werden. Eine den Garraum umgebende Isolierung besitzt vorzugsweise um den Einleitungsabschnitt eine Aussparung, so dass der Einleitungsabschnitt kühl, ganz außerhalb der Isolierung geführt ist, wie die ganze Dampfleitung und damit kürzer sein kann. Dies spart Kosten, da das Material des Einleitungsabschnitts teurer ist als das Material des Rests der Leitung. Der Einleitungsabschnitt ist zugunsten einer schlechten Wärmeweiterleitung relativ dünn und dünnwandig gehalten. Das Zwischenelement erlaubt auf einfache Weise dann die Wahl eines für einen guten Kondensatabfluss geeigneten Querschnitts des Zuleitungsabschnittsflussleitung mit nicht zu schneller Dampfströmung. Die Fangeinrichtung kann alternativ auch zwischen den Zuleitungsabschnitt und den Einleitungsabschnitt eingesetzt sein.

Das Gargerät kann ein Kombinations-Backofen sein und einen Garraum aufweisen, der mittels einer eigenen Heizung mindestens auf übliche Gar- und Backtemperaturen aufheizbar ist, aber zur pyrolytischen Reinigung auch bis auf 500 °C aufheizbar sein kann, wobei der daran anschließende, als Abkühlabschnitt dienende Einleitungsabschnitt der Dampfleitung ein gegen am Garraum auftretende hohe Temperaturen beständiges Material aufweist und so gestaltet und im Gerät angeordnet ist, dass daran ein deutlicher Temperaturabfall zu seinem vom Garraum abgelegenen Ende hin erfolgt, so dass daran ein Leitungsbauelement geringerer Temperaturbeständigkeit z.B ein Zwischenelement unmittelbar anschließen kann. Dieses weist vorzugsweise ein gummielastisches Material auf und bildet insbesondere ein Klemmverbindungsmittel zur fertigungsgünstigen Steckmontage.

Diese Weiterbildung hat den Vorteil bei einem Dampfgargerät bei geringem Fertigungsaufwand auf konstruktiv einfache Weise sehr hohe Garraumtemperaturen zu erlauben. Beim als Abkühlabschnitt dienenden Einleitungsabschnitt, geht es um das Herunterkühlen der Leitung bzw. den Temperaturabfall oder Temperaturgradienten entlang der Leitung, wobei eine, bei einigen Betriebsarten auftretende Kühlwirkung auf den Dampf in Kauf genommen wird. Bei Betriebsarten mit Aufheizung des Garraums mittels einer eigenen Heizung auf Temperaturen von etwa 100 °C oder mehr ist der Einleitungsabschnitt vom Garraum her so beheizt, dass darin nur ein geringer oder kein Kondensatausfall auftritt. Das bei manchen Betriebsarten durch den Einleitungsabschnitt etwas verstärkte Kondensat-Problem wird gemildert durch die dem Einleitungsabschnitt vorzugsweise unmittelbar vorgeschaltete Fangeinrichtung für Kondensat. Der Einleitungsabschnitt wird, für eine möglichst geringe Kondensatbildung kurz gehalten durch seine Bauart und Verwendung des thermisch isolierenden Zwischenelements aus einem relativ temperaturfesten Material.

Bei der Gestaltung des Einleitungsabschnitts sind dem Fachmann neben der Länge verschiedene andere Einflussgrößen geläufig und stehen zur Wahl und Abstimmung, z.B., für eine geringe Wärmenachspeisung vom Garraum her d.h. einen geringen Wärmefluss entlang der Leitung, eine dünne Wandstärke und eventuell ein Material relativ geringer Wärmeleitfähigkeit, aber ausreichender Temperaturfestigkeit wie Edelstahl, Keramikmaterial oder Glas. Ferner kann die Wärmeabgabe z.B. durch eine dunkle und/oder raue oder profilierte Oberfläche gefördert werden. Der Einleitungsabschnitt kann so geführt sein, dass er von einem kühlenden Luftstrom erreicht wird, der durch Thermik oder ein Gebläse angetrieben wird.

Diese Bauweise kann so kostengünstig sein, dass sie auch für verschieden ausgestattete Geräte einer Baureihe einheitlich verwendbar ist, auch wenn nicht bei allen Typen der Baureihe besonders hohen Temperaturen auftreten. Hierdurch können die Lagerhaltungs- und Fertigungskosten gesenkt werden. Dabei ist eine Kostenersparnis auch durch Verwendung unterschiedlich wärmebeständiger, z. T. preiswerterer Werkstoffe für das an den Einleitungsabschnitt anschließende Leitungsbauelement und weiterführende Zuleitungsteile der Dampfleitung, bei verschiedenen Typen einer Baureihe mit unterschiedlichen maximalen Garraumtemperaturen denkbar.

Weiter sind folgende Merkmale der vorliegenden Erfindung hervorzuheben:
Der Einleitungsabschnitt schließt, am wenigsten verschmutzungsanfällig, vorzugsweise an eine Durchgangsöffnung einer Deckwand des Garraums an und führt von da zunächst nach oben und dann bogenförmig nach unten, wo die weitere Dampfleitung neben oder hinter dem Garraum weiter nach unten zum Dampferzeuger führen kann. Im Deckwandbereich werden üblicherweise auch Kühlgebläse angeordnet, die den Einleitungsabschnitt mit kühlen können. Die Führung nach unten ist für die Kondensatfalle und den Kondensatrückfluss im Zuleitungsabschnitt günstig.

Der Einleitungsabschnitt, vorzugsweise aus Edelstahl mit etwa 0,5 bis 1 mm Wandstärke kann z.B eine Länge von etwa 6 bis 2o cm, vorzugsweise etwa 8 bis 15 cm und insbesondere etwa10 cm besitzen und kann etwa 20 bis 70 %, vorzugsweise etwa 30 bis 60 % und insbesondere etwa 45 % der Gesamtlänge der Dampfleitung einnehmen. Dabei beträgt der Temperaturabfall am Einleitungsabschnitt, in Grad Celsius gemessen, bei maximaler Garraumtemperatur zweckmäßigerweise mindestens etwa 20 %, vorzugsweise mindestens etwa 35 % und insbesondere etwa 50 % und liegt z.B. zwischen etwa 20 bis 80 %, vorzugsweise zwischen etwa 35 bis 65 % und insbesondere etwa im Bereich von 50 % der Garraumtemperatur. Beispielsweise erfolgt ein Temperaturabfall von 500 °C bei einem Pyrolysegerät oder etwa 280 bis 300 °C bei einem Gerät ohne Pyrolyse herunter auf etwa 200 bis 300°C, vorzugsweise etwa 220 bis 280 °C und insbesondere etwa 250 °C zum Anschluss eines Leitungsbauteils in Form eines Zwischenelements aus einem hoch temperaturbeständigen gummielastischen Material wie einem speziellen Silikonkautschuk oder auf etwa 130 °C zum Anschluss eines üblichen, zur Dampfleitung zugelassenen bzw. geeigneten preisgünstigen Schlauchs aus Silikonkautschuk.

Zusammenfassend kann man sagen, dass die Dampfleitung geteilt ist in einen am Garraum befestigten, relativ langen gekühlten Hochtemperatur-Teilabschnitt, den Einleitungsabschnitt, der bei vielen Anwendungen des Kombinationsbackofens vom Garraum beheizt ist und in dem in diesen Fällen wenig oder kein Kondensat ausfällt. Ferner einen weniger temperaturfesten Teilabschnitt, den Zuleitungsabschnitt, z.B. eine Schlauchleitung, der wesentlich preiswerter und thermisch isolierend und daher gut gegen Kondensatbildung und Kondensatausfall in der Dampfleitung sein kann. Dies ist eine kostengünstige, technisch gute Lösung, die weiter verbessert werden kann durch ein relativ kleines, thermisch isolierendes Zwischenelement höherer Temperaturfestigkeit. In dieser Dampfleitung ist kostengünstig eine Kondensatfangeinrichtung realisierbar, die den Kondensateintrag in den Garraum, insbesondere bei Betriebsarten mit geringeren Garraumtemperaturen senkt. Der Einleitungsabschnitt kann zusammen mit ihm zugeordneten Befestigungsmitteln zur Verbindung mit dem Garraum und dem Zwischenelement eine leicht montier- und lösbare, z.B. durch den Kundendienst austauschbare Baugruppe bilden.

Im Folgenden wird die Erfindung anhand schematischer Zeichnungen an einem Ausführungsbeispiel näher erläutert.

Es zeigt:

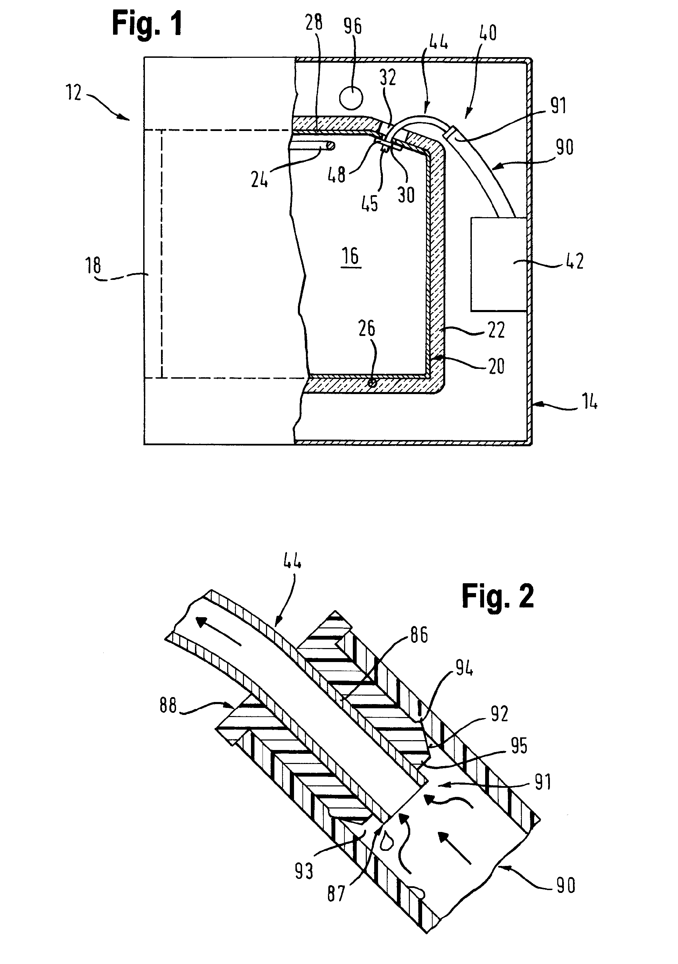

- Fig. 1: eine Seitenansicht eines Haushalts-Kombinationsbackofens teilweise in einem vertikalen Schnitt, wobei zur Vereinfachung der Darstellung Befestigungsmittel zur Verbindung von Garraum und Dampfleitung weggelassen sind und die Dampfleitung nicht mit geschnitten ist und
- Fig. 2: ausschnittsweise in einem Schnitt entsprechend dem der Fig.1, in vergrößertem Maßstab einen Teil der Dampfleitung mit einer Kondensatfangeinrichtung.

Das in den Figuren gezeigte Gargerät 12 besitzt ein Gerätegehäuse 14, in dem ein Garraum 16 angeordnet ist. Dieser besitzt eine übliche Tür 18 und im Übrigen eine Garraumwandung 20, die von einer Isolierung 22 umgeben ist. Der Garraum 16 ist über einen Grillheizkörper 24 und einem Bodenheizkörper 26, außer auf normale Backtemperaturen, zur Pyrolyse-Reinigung bis etwa 500° Celsius aufheizbar.

Die Garraumwandung 20 umfasst eine Deckwand 28, die in einem rückwärtigen, seitlichen Teilbereich leicht nach hinten und zur Seite hin abfallend ausgebildet ist und darin eine kreisrunde Durchgangsöffnung 30 aufweist. Im Bereich darüber besitzt die Isolierung 22 einen kreisrunden Ausschnitt 32, dessen Durchmesser etwas weiter ist als der Durchmesser der Durchgangsöffnung 30.

Über eine Dampfleitung 40 ist Dampf von einem hinter dem Garraum in mittlerer Höhe im Gargerät 12 angeordneten Dampferzeuger 42 durch die Durchgangsöffnung 30 in dem Garraum 16 einführbar. Die Dampfleitung 40 besitzt einen Einleitungsabschnitt 44, der die Durchgangsöffnung 30 der Deckwand 28 und den Ausschnitt 32 der Isolierung 22 durchsetzt und ein Stück in den Garraum 16 hineinragt. Ein Stück über dem inneren, unteren Ende des Einleitungsabschnitts 44 ist ein flach ringschalenförmiges Verschlusselement 48 durch Punktschweißung mit einem inneren Endabschnitt 45 des Einleitungsabschnitts 44 verbunden und liegt an der Innenseite der Deckwand 28 an. Das Verschlusselement 48 ist mit üblichen, hier nicht dargestellten Befestigungsmitteln, z.B. Schrauben, an der Deckwand 28 des Garraums 16 befestigt. Der Einleitungsabschnitt 44 besteht aus Edelstahlrohr mit einem Innendurchmesser von 6 mm und einer Wandstärke von 1 mm. Zugunsten einer geringen Wärmeleitung entlang dem Einleitungsabschnitt 44 kann die Wandstärke auch dünner sein und z.B. etwa 0,5 mm betragen.

Der Einleitungsabschnitt 44 der Dampfleitung 40 ist normal durch eine Öffnung in der Mitte des Verschlusselements 48 geführt und mit letzterem verschweißt. Da die Deckwand 28 des Garraumes im Verbindungsbereich schräg ausgeführt ist, erfolgt eine gerichtete Dampfabgabe aus einem unteren, durch das Verschlusselement 48 hindurch ragenden Teil des inneren Endabschnitts 45 des Einleitungsabschnittes 44 in Richtung eines mittleren Bereichs des Garraumes 16. Alternativ könnte der Einleitungsabschnitt auch schräg durch das gegen Drehung gesicherte Verschlusselement geführt sein. Der Einleitungsabschnitt 44 führt nach oben durch den Ausschnitt 32 der Isolierung 22 und dann bogenförmig nach hinten und endet mit einem schräg, unter einem Winkel von 45 Grad, nach unten gerichteten äußeren Endabschnitt 86. Der Einleitungsabschnitt 44 ist so lang, dass bei einer Garraumtemperatur von 500 Grad Celsius und eventuell durch die Nähe des Grillheizkörpers 24 noch etwas höheren Temperatur an der Anschlußstelle an der Deckwand 28 des Garraums 16, an seinem äußeren, freien Endabschnitt 86 eine Temperatur von etwa 250° Celsius erreicht wird. Der freie Endabschnitt 86 trägt ein thermisch isolierendes Leitungsbauelement in Form einer Reduzierhülse 88 aus einem hochtemperaturbeständigen Silikonkautschuk, die klemmend so auf ihn aufgesteckt ist, dass der äußere Endabschnitt 86 ein kleines Stückchen durchragt.

Ein vom Dampferzeuger 42 schräg nach oben führender Zuleitungsabschnitt 90 der Dampfleitung 40 in Form eines gummielastischen Schlauchs aus einem etwas weniger temperaturbeständigen Silikonkautschuk, mit einem Innendurchmesser von 14 mm ist klemmend auf die Außenseite der Reduzierhülse 88 aufgeschoben, die an ihrer Außenseite maximal eine Temperatur von etwa 130°Celsius erreicht. Die Reduzierhülse 88 besitzt an ihrem unteren Ende am Außenumfang eine Anlaufschräge 92, die in eine gerundet am Außenumfang leicht überstehende Umfangsrippe 94 übergeht, wodurch der schlauchförmige Zuleitungsabschnitt 90 gut aufsteckbar ist und gut auf der Reduzierhülse 88 gehalten wird. Die Verbindung kann zusätzlich durch, eine nicht dargestellte Federklammer gesichert sein.

In der Dampfleitung 40 setzt sich unvermeidbar Kondensat aus dem Dampf an den Innenwänden ab, das in den Garraum 16 mitgerissen werden kann. Dieses Problem kann dadurch verringert werden, dass die Verbindungsstelle zwischen dem Einleitungsabschnitt 44 und dem Zuleitungsabschnitt 90 als Fangeinrichtung 91 für Kondensat ausgebildet ist, in Form einer sprunghaften, deutlichen Verengung des Durchflussquerschnitts. Ein im Zuleitungsabschnitt 90 an der Innenwand nach oben mitgerissener Kondensatfilm stößt auf die schräg nach unten, innen vorspringende Anlaufschräge 92 der Reduzierhülse 88, die einen nach unten in den Zuleitungabschnitt 90 vorspringenden Ansatz 95 derselben bildet, und wird daran nach innen unten gelenkt und sammelt sich an der Unterseite der Reduzierhülse 88 und tropft von dort oder von dem unten aus der Reduzierhülse 88 etwas herausragenden, eine Abtropfkante 87 bildenden Endabschnitt 86 des Einleitungsabschnitts 44 nach unten in Richtung Dampferzeuger 42 ab oder fließen z.T.auch zur Seite um an der unteren Innenwand des Zuleitungsabschnitts abzufließen. Es wird auch ein Teil der Dampfströmung umgelenkt, wobei mitfliegende Kondensattropfen oder - Tröpfchen z.T. die Umlenkung auf Grund ihrer Wucht nicht mitmachen und auf die Reduzierhülse 88 prallen und sich dort absetzen, mit dem übrigen Kondensat vereinen und gesammelt abtropfen oder abfließen. Die Dampfleitung 40 verläuft im Bereich der Fangeinrichtung in einem Winkel von etwa 45 Winkelgraden zur Vertikalrichtung schräg nach oben. So sammelt sich das Kondensat bevorzugt auf der unteren Seite der Fangeinrichtung 91 und des Zuleitungsabschnitts 90. Es bildet dort größere Tropfen oder ein Rinnsal, die das nötige Gewicht haben sich gegen die Dampfströmung durchzusetzen und im Zuleitungsabschnitt 90 nach unten abzufließen. Der Durchflussquerschnitt des Zulaufabschnitts 90 ist in Abstimmung auf den Dampffluss so bemessen, dass die Dampfströmungsgeschwindigkeit dies zulässt. Der Zuleitungsabschnitt 90, Die Anlaufschräge 92, die Unterseite der Zwischenhülse 88 und das unten herausragende Ende des Einleitungsabschnitts 44 bilden auch eine nach unten offene, umlaufende Sammel-Rinne 93, der Fangeinrichtung 91, in der sich Kondensat sammeln und zur unteren Seit abfließen kann. Der Einleitungsabschnitt 44, in dem sich, vor allem bei Betrieb des Garraumes 16 mit niedrigen Temperaturen, wiederum Kondensat bilden kann, wird möglichst kurz gehalten, z.B. durch eine dünne Wandstärke zur Verringerung der Wärmeleitung.

Der Dampferzeuger 42, in dem Sattdampf erzeugt wird, kann in einer üblichen bekannten Bauart ausgeführt werden. Er kann durch Steuerung seiner Heizung oder von Wasserventilen oder auf Grund seiner sonstigen Bauart den Dampf während der Dampfbetriebsphasen des Garprogramms kontinuierlich oder in den Dampfphasen in Schübe unterteilt abgeben. Die schubweise Abgabe kann den Abfluss von gesammeltem Kondensat aus dem Kondensatfänger 91 durch den Zuleitungsabschnitt zurück zum Dampferzeuger 42 bzw. einem Wasservorrat desselben erleichtern oder, gemäß einer alternativen Ausführungsform mit engerem Leitungsquerschnitt, in den Pausen zwischen den Schüben ermöglichen. Vorzugsweise weist jedoch der Zuleitungsabschnitt einen so weiten Querschnitt auf, dass gesammeltes Kondensat auch gegen den Dampfstrom zurücktropfen oder zurückfließen kann.

Ein Luftstrom eines über der Deckwand 28 des Garraums 16 angeordneten Kühlgebläses 96, wie es in derartigen Geräten üblicherweise vorhanden ist, ist mittels nicht dargestellter Luftleiteinrichtungen auch über den Einleitungsabschnitt 44 geführt.

In Abwandlung der dargestellten Ausführungsform kann an Stelle des, als Zwischenelement bzw. Reduzierhülse 88 dienenden Formteils, auch ein einfacher Schlauchabschnitt als Reduzierhülse dienen. Dieser kann zum Ende des Einleitungsabschnitts zurückgesetzt, wie im Ausführungsbeispiel eine Rinne bildend oder auch bündig mit dem Ende des Einleitungsabschnitts abschließend sein. Im letzteren Fall wird eine einfache, im Schnitt gesehen rechtwinklige Querschnittsstufe in der Dampfleitung gebildet.

## Patentansprüche

1. Dampfgargerät, insbesondere für den Haushalt, mit einem Garraum (16), dem Dampf von einem Dampferzeuger (42) über eine Dampfleitung (40) zuführbar ist, **dadurch gekennzeichnet, dass** die Dampfleitung (40) eine Fangeinrichtung (91) für Kondensat umfasst.

2. Dampfgargerät nach Anspruch 1, **dadurch gekennzeichnet, dass** die Dampfleitung (40) einen den Dampferzeuger (42) und die Fangeinrichtung (91) verbindenden Dampf-Zuleitungsabschnitt (44) aufweist, der in Dampfströmungsrichtung nach oben führt und in dem das Kondensat von der Fangeinrichtung in Richtung Dampferzeuger (42) abfließt oder abtropft.

3. Dampfgargerät, insbesondere für den Haushalt, mit einem Garraum (16), dem Dampf von einem Dampferzeuger (42) über eine Dampfleitung (40) zuführbar ist, insbesondere nach Anspruch 1 oder 2, **dadurch gekennzeichnet, dass** die Dampfleitung (40) einen an den Dampferzeuger (42) anschließenden, in Dampfströmungsrichtung nach oben führenden Dampf-Zuleitungsabschnitt (90) aufweist, dessen Durchflussquerschnitt so auf die abgegebenen Dampfmengen abgestimmt ist, dass die Dampfströmungsgeschwindigkeit langsam genug ist, um Kondensattropfen oder -Rinnsale darin gegen die Dampfströmung abtropfen oder abfließen zu lassen.

4. Dampfgargerät nach einem der Ansprüche 1 bis 3, **dadurch gekennzeichnet, dass** der Dampferzeuger (42) dem Zuleitungsabschnitt (90) schubweise Dampf zuführt.

5. Dampfgargerät nach einem der Ansprüche 1 bis 4, **dadurch gekennzeichnet, dass** der Zuleitungsabschnitt (90) mindestens im Bereich der Fangeinrichtung (91) schräg nach oben verläuft.

6. Dampfgargerät nach Anspruch 5, **dadurch gekennzeichnet, dass** der Zuleitungsabschnitt (90) mindestens im Bereich der Fangeinrichtung (91) einen Winkel von etwa 20 bis 60 und insbesondere etwa 40 Winkelgraden mit der Vertikalrichtung einschließt.

7. Dampfgargerät nach einem der Ansprüche 1 bis 6, **dadurch gekennzeichnet, dass** die Dampfleitung (40) zur Bildung der Fangeinrichtung (91) eine Strömungsumlenkstelle aufweist

8. Dampfgargerät nach Anspruch 7, **dadurch gekennzeichnet, dass** zur Bildung der Strömungsumlenkstelle die Dampfleitung (40) eine sprunghafte, deutliche Verengung ihres Durchflussquerschnitts aufweist.

9. Dampfgargerät nach Anspruch 7 oder 8, **dadurch gekennzeichnet, dass** die innere Weite der Dampfleitung (40) an der Verengungsstelle auf unter etwa 55 %, vorzugsweise unter etwa 45 % verengt ist.

10. Dampfgargerät nach einem der Ansprüche 7 bis 9, **dadurch gekennzeichnet, dass** die Strömungsumlenkstelle einen engeren Leitungsabschnitt (44) aufweist, der ein Stück weit frei in einen, im Querschnitt weiteren Leitungsabschnitt (90) ragt.

11. Dampfgargerät nach einem der Ansprüche 7 bis 10, **dadurch gekennzeichnet, dass** die Strömungsumlenkstelle einen engeren (44) und einen im Querschnitt weiteren Leitungsabschnitt (90) sowie ein diese verbindendes Zwischenelement (88) aufweist und das Zwischenelement einen frei ein Stück in den weiteren Leitungsabschnitt (90) vorspringenden Ansatz (95) aufweist.

12. Dampfgargerät nach einem der Ansprüche 1 bis 11, **dadurch gekennzeichnet, dass** die Dampfleitung (40) einen, an den Garraum (16) anschließenden Einleitungsabschnitt (44) besitzt, und die Fangeinrichtung (91) im Übergangsbereich vom Zuleitungsabschnitt (90) zum Einleitungsabschnitt (44) angeordnet ist.

13. Dampfgargerät nach einem der Ansprüche 10 bis 12, **dadurch gekennzeichnet, dass** der Einleitungsabschnitt (44) den engeren und der Zuleitungsabschnitt (90) den im Querschnitt weiteren Leitungsabschnitt bilden und diese Leitungsabschnitte durch das Zwischenelement (88) verbunden sind.

14. Dampfgargerät, insbesondere Kombinations-Backofen, nach einem der Ansprüche 1 bis 13, **dadurch gekennzeichnet, dass** der Garraum (16) mittels einer eigenen Heizung (24, 26) mindestens auf übliche Gar- und Backtemperaturen aufheizbar ist und der Einleitungsabschnitt (44) ein gegen am Garraum auftretende Temperaturen beständiges Material aufweist und so gestaltet und im Gerät angeordnet ist, dass daran ein deutlicher Temperaturabfall zu seinem vom Garraum (16) abgelegenen Endabschnitt (86) hin erfolgt,

15. Dampfgargerät nach einem der Ansprüche 1 bis 14, **dadurch gekennzeichnet, dass** der Einleitungsabschnitt (44) Metall, das Zwischenelement (88) ein hochtemperaturfestes gummielastisches Material und der Zuleitungsabschnitt (90) ein weniger temperaturfestes gummielastisches Material aufweisen.
